# EUROPEAN PATENT APPLICATION

(11) **EP 4 710 764 A1**
(43) Date of publication of application: **18.03.2026**
(21) Application number: 24200721.9
(22) Date of filing: 17.09.2024
(51) Int. Cl.: A01N 35/10, A01N 43/40, A01P 13/00

(54) **HERBICIDAL MIXTURES COMPRISING AMINOPYRALID AND CLETHODIM**

(71) Applicant: Adama Agan Ltd., 7710201 Ashdod (IL)
(72) Inventor: YOGEV, Ehud, 7986000 Timurim (IL); KERGOAT, Pierre-Yves, 75010 Paris (FR)
(74) Representative: Modiano, Gabriella Diana

(57) **Abstract**

The present invention provides herbicidal mixtures comprising clethodim and aminopyralid, compositions comprising said mixtures and their use in controlling weeds.

## Description

### TECHNICAL FIELD

The present invention provides herbicidal mixtures comprising clethodim and aminopyralid, herbicidal compositions comprising said mixtures and methods of use.

### BACKGROUND ART

The vulnerability of crops to weeds makes crop protection management one of the major components of the total crop production system. Various insects and fungi along with the undesired weeds are very harmful to crop plants and can significantly reduce crop yields and qualities. Herbicides alone or in combination help minimize this damage by controlling threats to the crop. Many active ingredients either of the same class or having mixtures of different classes are commercially available for these purposes.

Controlling weed or undesired vegetation is important to achieve high crop yield and quality. Often, crop cultures contain various undesired weeds and although herbicides can provide protection against a spectrum of weeds, they may not have any effect on certain type of weeds that might be present in the crop culture. Therefore, there is usually a strong need for using a mixture of herbicides.

Moreover, in crop protection, it is desirable to increase the specificity and the reliability of the action of active compounds, more particularly, to make sure said active compounds effectively control the harmful plants and, at the same time, are tolerated by the useful plants in question.

Mixtures of selected herbicides have several advantages over the use of a single herbicide including (a) an increase in the spectrum of weeds controlled or an extension of weed control over a longer period of time; (b) an improvement in crop safety and reduction in crop phytotoxicity by using minimum doses of selected herbicides applied in combination rather than a single high dose of one herbicide; and (c) a delay in the appearance of resistant weed species to selected herbicides (Damalas, 2004). Yet, it is often difficult to predict the activity and selectivity of a specific herbicide mixture, considering that the behavior of a specific herbicide in the mixture may be affected by the presence of the other(s), and the activity of the mixture may considerably vary depending on the chemical characters of the herbicides in the mixture, the plant species, the growth stage, and the environmental conditions. Mostly, this practice results in reduced activity of the herbicides in the mixture.

Aminopyralid (4-amino-3,6-dichloropyridine-2-carboxylic acid) is a synthetic auxin in the pyridine carboxylic acid class of herbicides.

Auxins are plant hormones that regulate several plant activities, including development of the plant embryo, leaf formation, phototropism, gravitropism, apical dominance, fruit development, abscission, and root initiation. Auxins are actively transported into cells by a transmembrane transporter protein and leave the cells by facilitated diffusion through a different transporter. Based on studies of various auxin analogues, it was postulated that the import mechanism allows auxinic herbicides into the cell, but they cannot leave the cell through the exporter. Cellular effects caused by auxinic herbicides include alteration in cell wall elasticity and gene expression. Additionally, non-productive tissue growth if often induced, resulting in epinasty and phloem disruption, preventing the movement of photosynthate and causing death in days to weeks.

Synthetic auxin herbicides (Weed Science Society of America! Herbicide Resistance Action Committee Group 4/O) are a class of herbicides that mimic the activity of indole-3-acetic acid (IAA), an integral plant hormone affecting cell growth, development, and tropism. Structural variation in each herbicide molecule influences binding to receptor proteins and the degradation rate within the cell. Synthetic auxins are most commonly used to control broadleaf weeds in small grain cereals, fallow, and rangeland systems, although some are used to control grass and sedge species (Todd *et al.,* 2020).

Aminopyralid provides systemic postemergence broad-spectrum control of several key noxious and invasive annual, biennial and perennial weed species, as well as agronomic broadleaf weeds. Aminopyralid can also provide residual weed control activity controlling re-infestations and reducing the need for re-treatment depending on the rate applied and the target weeds.

Clethodim is an acetyl-coenzyme A carboxylase (ACCase) inhibitor in the cyclohexanedione class of herbicides. Three chemically distinct classes of herbicides that are known to inhibit ACCase are aryloxyphenoxypropionates (APP), cyclohexanediones (CHD), and the phenylpyrazolin class herbicide pinoxaden.

Acetyl-CoA carboxylase is a key enzyme involved in the first step of fatty acid biosynthesis. In plants, there are two isoforms of ACCase: The plastid ACCase is essential in biosynthesis of primary fatty acids and the cytosolic ACCase is involved in biosynthesis of long chain fatty acids. The homomeric ACCase in the cytosol of nearly all plant species and the heteromeric ACCase in the chloroplasts of dicots are insensitive to APP, CHD, and pinoxaden herbicides. In contrast, the plastidic homomeric ACCase in nearly all grass species is herbicide sensitive, and this is the basis for selective control of grass weeds by ACCase herbicides. All ACCase isoforms contain three catalytic domains: the biotin carboxyl carrier, the biotin carboxylase, and the carboxyl transferase (CT) domains. Molecular and biochemical studies have clearly established that the CT domain of the plastidic homomeric ACCase is the primary target site for APP and CHD herbicides, and two regions of the CT domain of the plastidic ACCase are critical for sensitivity to these herbicides (Yu *et al.,* 2007).

Clethodim is used to control grass weeds infesting dicot crops.

There is a need to provide a herbicidal combination, more specifically a herbicidal combination comprising clethodim and aminopyralid, that has advantageous properties, e.g., synergistic effect, on weeds thereby helping in resistance management, reducing dosage of herbicides used, and having excellent residual effect.

### SUMMARY OF INVENTION

It has now been found, in accordance with the present invention, that a mixture of clethodim and aminopyralid had a synergistic effect in controlling broadleaves weeds. More specifically, and as shown herein, a mixture of clethodim and aminopyralid triisopropanaolamine salt, had synergistic effect in controlling the weeds *Chenopodium album*) and *Amaranthus retroflexus.*

In one aspect, the present invention thus provides a herbicidal mixture comprising: (i) clethodim and (ii) aminopyralid or a salt, an ester, or a combination thereof. In certain embodiments, said clethodim and aminopyralid are the only active ingredients in said mixture.

In another aspect, the present invention relates to a composition comprising: (i) clethodim; (ii) aminopyralid or a salt, an ester, or a combination thereof; and (iii) agriculturally acceptable carrier. In certain embodiments, said clethodim and aminopyralid are the only active ingredients in said composition.

In a further aspect, the present invention relates to a method of controlling weed comprising applying to a locus an effective amount of a herbicidal mixture comprising: (i) clethodim and (ii) aminopyralid or a salt, an ester, or a combination thereof.

### DETAILED DESCRIPTION

In one aspect, disclosed herein is a herbicidal mixture comprising: (i) clethosim; and (ii) aminopyralid or a salt, an ester, or a combination thereof.

In certain embodiments, the aminopyraid comprised within the herbicidal mixture of the invention is in its free acid form rather than a salt form, i.e., wherein all its acid groups are in their free acid form.

In certain embodiments, the aminopyralid comprised within the herbicidal mixture of the invention is in its salt form.

Non-limiting salts of aminopyralid include alkali metal salts such as sodium salts and potassium salts; ammonium salts or substituted ammonium salts such as mono-, di- and tri-C₁-C₈-alkylammonium salts (e.g., methyl ammonium, dimethylammonium, and isopropylammonium); mono-, di- and tri-hydroxy-C₂-C₈- alkylammonium salts such as hydroxyethylammonium, di(hydroxyethyl)ammonium, tri(hydroxyethyl)ammonium, hydroxypropylammonium, di(hydroxypropyl)ammonium and tri(hydroxypropyl)ammonium salts (e.g., monoethanolammonium and triisopropanolammonium salts); olamine salts; and diglycolamine salts.

Particular such embodiments are those wherein the aminopyralid comprised within the mixture of the invention is aminopyralid triisopropanolamine salt.

In certain embodiments, the aminopyralid comprised within the herbicidal mixture of the invention is in its ester form. Non-limiting examples of esters of aminopyralid include C₁-C₈-alkyl esters and C₁-C₄-alkoxy-C₂-C₄-alkyl esters, such as methyl esters, ethyl esters, isopropyl, butyl, hexyl, heptyl, isoheptyl, isooctyl, 2-ethylhexyl, methylheptyl (MHE; meptyl), butoxypropyl (butometyl), and butoxyethyl esters; and aryl esters such as benzyl.

In certain embodiments, the weight ratio between aminopyralid or a salt, an ester, or a combination thereof and clethodim in the composition of the invention according to any one of the embodiments above is from about 1:0.5 to about 1:150, e.g., from about 1:1 to about 1:100, from about 1:1.5 to about 1:95, from about 1:2 to about 1:90, from about 1:5 to about 1:85, from about 1:10 to about 1:80, or from about 1:15 to about 1:75, respectively (calculated on an acid equivalent base of aminopyralid).

In certain embodiments, the clethodim and aminopyralid comprised within the mixture of the invention according to any one of the embodiments above are the only active ingredients comprised within said mixture, i.e., there are no other active ingredients in said mixture besides clethodim and aminopyralid.

In another aspect, the present invention relates to a composition comprising: (i) clethodim; (ii) aminopyralid or a salt, an ester, or a combination thereof; and (iii) agriculturally acceptable carrier.

The term "agriculturally acceptable carrier" as used herein refers to an inert substance which is known and accepted in the art for the formation of compositions for agricultural or horticultural use, and which facilitates the application of the active ingredients. The carrier may be in the form of a solid or a liquid.

Examples of solid carriers include, but are not limited to, mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; resins; waxes; fertilizers such as ammonium sulfate, ammonium phosphate, ammonium nitrate, ureas, and products of vegetable origin such as cereal meal, tree bark meal, wood meal, and nutshell meal; and cellulose powders.

Examples of liquid carriers include, but are not limited to, water; aromatic hydrocarbons such as alkylbenzenes and alkylnaphthalenes; alcohols such as cyclohexanol, and decanol; ethylene glycol; polypropylene glycol; dipropropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; and ketones such as cyclohexanone, 2-heptanone, isophorone, and 4-hydroxy-4-methyl-2-pentanone.

In certain embodiments, the composition of the invention according to any one of the embodiments above further comprises at least one, e.g., one, two, three, or more, excipient(s) such as a surfactant.

The term "agriculturally acceptable excipient" as used herein refers to an inert substance which is known and accepted in the art for the formation of compositions for agricultural or horticultural use, and that itself is not an active ingredient but is added to the formulation to improve one or more of its properties, such as stability, flowability, density, and the like. Examples of such excipients include, but are not limited to, pH modifiers (e.g., acids or bases), thickening agents (thickeners), sticking agents, surfactants, anti-oxidation agents, and anti-foaming agents.

The term "surfactant" as used herein refers to any agriculturally acceptable material which imparts or improves emulsifiability, spreading, wetting, dispersibility, or other surface-modifying properties of a herbicidal formulation, and optionally stability of said formulation, e.g., by inhibiting crystal growth or avoiding particle agglomeration. Non-limiting examples of surfactants include (i) nonionic surfactants such as fatty alcohol surfactants (e.g., cetyl alcohol), monoglyceride surfactants (e.g., glycerol monolaurate), polysorbate surfactants (e.g., Tween-20, Tween-40, Tween-60, Tween-65, Tween-80, and Tween-85), tristyrylphenol ethoxylate surfactants (e.g., Soprophor^{®} TS/54), ethoxylated alkylphenol surfactants (e.g., a nonylphenol ethoxylate such as Tergitol NP-9^{™}), ethoxylated arylphenol surfactants, ethoxylated castor oil surfactants (e.g., Alkamuls^{®} OR/36, Stepantex^{®} CO-40, and Stepantex^{®} CO-36), ethylene oxide- and propylene oxide-block copolymers, and polyvinyl alcohol-vinyl acetate copolymers; (ii) anionic surfactants such as fatty acid sulfonates (e.g., lauryl sulfonate); (iii) cationic surfactants such as quaternary ammonium surfactants (e.g., cetylpyridinium chloride and dimethyldioctadecylammonium chloride); and (iv) ampholytic surfactants such as cocamidopropyl betaine and (3-[(3-Cholamidopropyl) dimethylammonio]-1-propanesulfonate).

In certain embodiments, the weight ratio between aminopyralid or a salt, an ester, or a combination thereof and clethodim in the composition of the invention according to any one of the embodiments above is from about 1:0.5 to about 1:150, e.g., from about 1:1 to about 1:100, from about 1:1.5 to about 1:95, from about 1:2 to about 1:90, from about 1:5 to about 1:85, from about 1:10 to about 1:80, or from about 1:15 to about 1:75, respectively (calculated on an acid equivalent base of aminopyralid).

According to the invention, the aminopyralid comprised within the composition of the invention may be in its acid free form rather than a salt form, in its salt form, in its ester form, each as defined herein, or any combination thereof.

In certain embodiments, the aminopyralid comprised within the composition of the invention according to any one of the embodiments above is aminopyralid triisoprapanolamine salt.

In certain embodiments, the clethodim and aminopyralid comprised within the composition of the invention according to any one of the embodiments above are the only active ingredients comprised within said composition, i.e., there are no other active ingredients in said composition besides clethodim and aminopyralid.

In a further aspect, the present invention relates to various agricultural uses, e.g., pre- and/or post-emergence weed control, in which a herbicidal mixture comprising: (i) clethodim and (ii) aminopyralid or a salt, an ester, or a combination thereof, is utilized.

In one particular such aspect, disclosed herein is a method of controlling weed, also referred to herein as undesired vegetation, comprising applying to a locus an effective amount of a mixture as defined herein, in any one of the embodiments above.

In another particular such aspect, disclosed herein is a method of controlling weed, also referred to herein as undesired vegetation, comprising applying to a locus an effective amount of a composition as defined herein, in any one of the embodiments above.

The term "locus" as used herein refers not only to areas where the weed may already be developed, but also to areas where weeds have yet to emerge, and to areas under cultivation. Locus includes the crop and propagation material of the crop (all the generative parts of the crop such as seeds and vegetative plant material such as cuttings and tubers, which can be used for the multiplication of the plant). Examples of propagation material of the crop include seeds, tubers, spores, corms, bulbs, rhizomes, sprouts basal shoots, stolons, buds and other parts of plants, including seedlings and young plants, which could be transplanted after germination or after emergence from soil. Locus also includes the area surrounding the crop and the growing media of the crop, such as soil and crop field.

In certain embodiments, the locus is a field of crop. The term "crop" (or "plant") as used herein refers to whole plants, plant organs (e.g., leaves, stems, twigs, roots, trunks, limbs, shoots, fruits, etc.), plant cells, or plant seeds. Non-limiting examples of crops are dicotyledon crops such as soybean, canola, oilseed rape, sunflower, sugar beet, peas, vegetables, and fruits, and cereals.

In certain embodiments, the weeds that can be controlled by the method of the present invention include weeds that belong to amaranth family such as a weed from the genus *Chenopodium* (e.g., *Chenopodium album*) and a weed from the genus *Amaranthus* (e.g., *Amaranthus retroflexus*)*.*

In certain embodiments, the clethodim and aminopyralid or a salt, an ester, or a combination thereof, utilized according to the method of the invention according to any one of the embodiments defined above, are applied from a sole composition, e.g., in the form of a "ready mix" ("ready-for-use") composition, which is optionally diluted with water before use.

In certain embodiments, clethodim and aminopyralid or a salt, an ester, or a combination thereof, utilized according to the method of the invention according to any one of the embodiments defined above, are applied from two separate compositions (i.e., one of said compositions comprises said clethodim, and the second composition comprises said aminopyralid), either: (i) concurrently (simultaneously), e.g., in the form of a "tank mix", or (ii) sequentially in any order, e.g., after diluting each one said compositions with water.

The composition(s) applied according to the method of the invention according to any one of the embodiments defined above, each independently may be of any type known in the art, e.g., in the form of a liquid formulation such as a soluble liquid, suspension concentrate, emulsifiable concentrate, suspoemulsion, concentrated aqueous emulsion, or a dry formulation such as a granule, a wettable powder, a soluble powder, a water-dispersible granule, or a dry flowable.

In certain embodiments, clethodim utilized according to the method disclosed herein according to any one of the embodiments above is applied at a rate in the range of from about 10 to about 500 g/ha, e.g., in the range of from about 20 to 450 g/ha, from about 30 to about 400 g/ha, from about 40 to about 350 g/ha, or from about 50 to about 300 g/ha.

In certain embodiments aminopyralid or a salt, an ester, or a combination thereof utilized according to the method disclosed herein according to any one of the embodiments above is applied at a rate in the range of from about 1 to about 20 g/ha, e.g., in the range of from about 1.5 to 15 g/ha, or from about 2 to about 10 g/ha (calculated on an acid equivalent base of aminopyralid).

In certain embodiments, clethodim utilized according to the method disclosed herein according to any one of the embodiments above is applied at a rate in the range of from about 10 to about 500 g/ha, e.g., in the range of from about 20 to 450 g/ha, from about 30 to about 400 g/ha, from about 40 to about 350 g/ha, or from about 50 to about 300 g/ha; and aminopyralid or a salt, an ester, or a combination thereof utilized according to the method disclosed herein according to any one of the embodiments above is applied at a rate in the range of from 1 to about 20 g/ha, e.g., in the range of from about 1.5 to 15 g/ha, or from about 2 to about 10 g/ha (calculated on an acid equivalent base of aminopyralid).

In certain embodiments, the ratio between the application rate (g/ha) of aminopyralid or a salt, an ester, or a combination thereof and the application rate (g/ha) of clethodim, utilized according to the method disclosed herein according to any one of the embodiments above, is from about 1:1 to about 1:100, e.g., from about 1:1.5 to about 1:95, from about 1:2 to about 1:90, from about 1:5 to about 1:85, or from about 1:10 to about 1:80, respectively (calculated on an acid equivalent base of aminopyralid).

It should be noted that all numbers throughout this specification which refer to aminopyralid, e.g., ratios and application rate, are calculated on an acid equivalent base of aminopyralid. The term "acid equivalent" (a.e.) refers to the amount of the acid form of an active ingredient such as aminopyralid that is calculated from the amount of a salt or ester form of that active ingredient. For example, if the acid form of an active ingredient "Z" has a molecular weight of 100 Dalton, and the salt form of Z has a molecular weight of 130 Dalton, an application of 130 g ai/ha of the Z salt would be equal to applying 100 g ae/ha of the acid form of Z: 130 g ai/ha Z salt * (100 Da Z acid / 130 Da Z salt) = 100 g ae/ha Z acid.

According to the invention, a synergistic effect exists whenever the action of an active ingredient combination is greater than the sum of the actions of the individual components.

In the field of agriculture, it is often understood that the term "synergy" is as defined by Colby S. R. in an article entitled "Calculation of the synergistic and antagonistic responses of herbicide combinations" published in the journal Weeds, 1967, 15, p. 20-22.

The action expected for a given combination of two active components can be calculated as follows: E = X + Y - XY/100, in which E represents the expected effect, e.g. percentage of pest control, for the combination of the active ingredients at defined doses (for example equal to x and y respectively), X is the effect, e.g. percentage of pest control, observed for compound (I) at a defined dose (equal to x), Y is the effect, e.g. percentage of pest control, observed for compound (II) at a defined dose (equal to y).

Here, efficacy or percent inhibition is determined in %. 0% means efficacy that corresponds to the Control, i.e., as if no treatment had been applied. Whereas a percent inhibition of 100% means that complete control is observed. When the percent control observed for the combination is greater than E, there is a synergistic effect. When the percent control observed for the combination is equal to E, there is an additive effect and wherein the percent control observed for the combination is lower than E, there is an antagonistic effect.

Unless otherwise indicated, all numbers expressing, e.g., application rates or ratios between components, used in this specification, are to be understood as being modified in all instances by the term "about". Accordingly, unless indicated to the contrary, the numerical parameters set forth in this specification are approximations that may vary by up to plus or minus 10% depending upon the desired properties to be obtained by the present invention.

The invention will now be illustrated by the following non-limiting Examples.

### EXAMPLES

### Example 1. The efficacy of a mixture of clethodim and aminopyralid in controlling weeds

***Objective.*** Evaluating the efficacy of the mixture of clethodim and aminopyralid under pot trials conditions in the control of different weeds.

***Materials and methods.*** Seeds of *Chenopodium album* and *Amaranthus retroflexus* were planted in pot with artificial soil. 5 plants per pot were grown. They were grown in controlled conditions till the stage BBCH 11 (second leave emerging) and treated with herbicide. Each treatment was applied on 4 replicates. Then, the efficacy was measured at 28 Days After Treatment.

***Assessments.*** Each treatment was performed in 4 repetitions and an un-treated control was included for each weed species. The percentage of control of the weed infestations was assessed using a visual scale ranging from 0-100%, where 0% indicates the absence of symptoms, and 100% represents the death of the weeds [Brazilian Society of Weed Science-SBCPD (1995) Procedures for Installation, Evaluation and Analysis of Experiments with Herbicides, Londrina]. These assessments were conducted at 28 days after application (DAA).

The tested weeds used were *Chenopodium album* (CHEAL) and *Amaranthus retroflexus* (AMARE).

**Table 1** summarizes the efficacy of the mixture of clethodim and aminopyralid on the tested weeds at 28 days after application; and summarizes the Colby calculations obtained for the tested mixture of clethodim and aminopyralid. The numbers refer to aminopyralid are calculated on an acid equivalent base of aminopyralid.

**Table 1**

| **product** | **active ingredient (g/ha)** | **Rate of product (L/ha)** | **% control (efficacy) on specific weed species** | | **Expected efficacy** | | **Colby coefficient** | |
|---|---|---|---|---|---|---|---|---|
| | | | CHEAL | AMARE | CHEAL | AMARE | CHEAL | AMARE |
| untreated control | 0 | 0 | 0 | 0 | | | | |
| Clethodim | 300 | 1.25 | 36 | 33 | | | | |
| Aminopyralid | 3.84 | 0.016 | 60 | 30 | | | | |
| Aminopyralid | 6 | 0.025 | 57 | 50 | | | | |
| clethodim + aminopyralid | 300 + 3.84 | 1.25 + 0.016 | 90 | 83 | 75 | 53 | 1.2 | 1.55 |
| clethodim + aminopyralid | 300 + 6 | 1.25 + 0.025 | 98 | 94 | 73 | 67 | 1.34 | 1.4 |

| | | | | | | | | |
|---|---|---|---|---|---|---|---|---|
| g at/Ha = gram active ingredient per hectare CHEAL - *Chenopodium album* AMARE - *Amaranthus retroflexus* | | | | | | | | |

***Results.*** The efficacy of the tested mixtures, at 28 days after application showed synergic effect on the evaluated weeds *Chenopodium album* and *Amaranthus retroflexus.* Specifically, for the *Chenopodium album* and *Amaranthus retroflexus,* at all the tested ratios of clethodim and aminopyralid, the mixtures had a superior efficacy compared to the calculated expected efficacy based on the Colby equation, confirming synergism of those a.i.'s in mixture for the tested weeds.

### REFERENCES

Damalas, C.A., Herbicide tank mixtures: common interactions. Int. J. Agric. Biol., 2004, 6, 209-212
Todd O.E., Figueiredo M.R., Morran S., Soni N., Preston C., Kubeš M.F., Napier R., Gaines T.A. Synthetic auxin herbicides: finding the lock and key to weed resistance. *Plant Science,* **2020,** 300, 110631
Yu Q., Collavo A., Zheng M.Q., Owen M., Sattin M., Powles S.B. Diversity of acetyl-coenzyme A carboxylase mutations in resistant Lolium populations: evaluation using clethodim. Plant physiology, 2007, 145, 547-558

## Claims

1. A herbicidal mixture comprising: (i) clethodim and (ii) aminopyralid or a salt, an ester, or a combination thereof.

2. The herbicidal mixture of claim 1, wherein said aminopyralid is in the form of a free acid or a salt thereof.

3. The herbicidal mixture of claim 2, wherein aminopyralid is in the form of a salt thereof such as aminopyralid triisopropanolamine salt.

4. The herbicidal mixture of any one of claims 1-3, wherein the weight ratio between aminopyralid to clethodim is from about 1:0.5 to about 1:100, respectively (calculated on an acid equivalent base of aminopyralid).

5. The herbicidal mixture of claim 4, wherein the weight ratio between aminopyralid to clethodim is from about 1:1 to about 1:90, or from about 1:5 to about 1:80, respectively (calculated on an acid equivalent base of aminopyralid).

6. The herbicidal mixture of any one of claims 1-5, wherein said clethodim and aminopyralid are the only active ingredients in said mixture.

7. A composition comprising: (i) clethodim; (ii) aminopyralid or a salt, an ester, or a combination thereof; and (iii) agriculturally acceptable carrier.

8. The composition of claim 7, further comprising at least one agriculturally acceptable excipient such as a surfactant.

9. The composition of claim 7 or 8, wherein the weight ratio between aminopyralid to clethodim is from about 1:0.5 to about 1:100, respectively (calculated on an acid equivalent base of aminopyralid).

10. The composition of claim 9, wherein the weight ratio between aminopyralid to clethodim is from about 1:1 to about 1:90, or from about 1:5 to about 1:80, respectively (calculated on an acid equivalent base of aminopyralid).

11. The composition of any one of claims 7-10, said aminopyralid is in the form of a free acid or a salt thereof.

12. The composition of claim 11, wherein aminopyralid is in the form of a salt thereof such as aminopyralid triisopropanolamine salt.

13. The composition of any one of claims 7-12, wherein said clethodim and aminopyralid are the only active ingredients in said composition.

14. A method of controlling weed comprising applying to a locus an effective amount of a herbicidal mixture comprising: (i) clethodim and (ii) aminopyralid or a salt, an ester, or a combination thereof.

15. The method of claim 14, wherein said locus is a field of crop.

16. The method of claim 14, wherein said weed belongs to amaranth family such as a weed from the genus *Chenopodium* (e.g., *Chenopodium album)* and a weed from the genus *Amaranthus* (e.g., *Amaranthus retroflexus).*

17. The method according to any one of claims 14-16, wherein clethodim and aminopyralid or a salt, an ester, or a combination thereof are applied from a sole composition.

18. The method according to any one of claims 14-16, wherein clethodim and aminopyralid or a salt, an ester, or a combination thereof are applied from two separate compositions, either concurrently or sequentially in any order.

19. The method of claim 17 or 18, wherein each one of said compositions is a soluble liquid composition, suspension concentrate, emulsifiable concentrate, suspoemulsion, or concentrated aqueous emulsion.

20. The method of claim of any one of claims 14-19, wherein: (i) clethodim is applied at a rate in the range of from about 10 to about 500 g/ha, preferably in the range of from about 50 to 350 g/ha; and/or (ii) aminopyralid or a salt, an ester, or a combination thereof is applied at a rate in the range of from about 1 to about 20 g/ha, preferably in the range of from about 2 to 10 g/ha (calculated on an acid equivalent base of aminopyralid).

21. The method of any one of claims 14-20, wherein the ratio between the application rate (g/ha) of aminopyralid or a salt, an ester, or a combination thereof and the application rate (g/ha) of clethodim is from about 1:1 to about 1:100, respectively (calculated on an acid equivalent base of aminopyralid).
